# EUROPÄISCHE PATENTSCHRIFT

(11) **EP 3 227 000 B1**
(45) Veröffentlichungstag und Bekanntmachung des Hinweises auf die Patenterteilung: **03.06.2020**
(21) Anmeldenummer: 15801864.8
(22) Anmeldetag: 30.11.2015
(51) Int. Cl.: B01D 46/00, B01D 46/10, B01D 46/12, B01D 46/24

(54) **FILTERELEMENT**
FILTER ELEMENT
ÉLÉMENT FILTRANT

(30) Priorität: 03.12.2014 DE 102014224766
(43) Veröffentlichungstag der Anmeldung: 11.10.2017
(73) Patentinhaber: Mahle International GmbH, 70376 Stuttgart (DE)
(72) Erfinder: JERGER, Alexander, 71739 Oberriexingen (DE)
(74) Vertreter: BRP Renaud & Partner mbB Rechtsanwälte Patentanwälte Steuerberater
(86) Internationale Anmeldenummer: PCT/EP2015/078093
(87) Internationale Veröffentlichungsnummer: WO 2016/087386

(56) Entgegenhaltungen:
- WO-A1-2012/084753
- DE-A1-102014 001 539
- GB-A- 2 162 087
- US-A1- 2008 072 552

## Beschreibung

Die Erfindung betrifft eine Filtereinrichtung, insbesondere für einen Verbrennungskraftmotor oder eine Brennkraftmaschine eines Kraftfahrzeugs, mit einer Fahrzeugseitigen Aufnahme und einem wechselbaren Filterelement, insbesondere Luftfilterelement, wobei das Filterelement einer erste Endscheibe, eine zweite Endscheibe und ein zwischen den Endscheiben angeordnetes Filtermaterial aufweist, das einen Reinluftbereich von einem Rohluftbereich trenn. Ferner betrifft die Erfindung ein Verfahren zur Herstellung eines Filterelements für eine solche Filtereinrichtung.

Solche Filtereinrichtungen werden beispielsweise im Frischluftansaugtrakt von Verbrennungsmotoren oder bei Brennstoffzellen verwendet. Üblicherweise weisen solche Filtereinrichtungen in ein Filtergehäuse auf, in welches ein Filterelement eingesetzt wird und welches einen Rohluftbereich und einen Reinluftbereich umschließt. Nach Erreichen der Standzeit des Filterelements kann dieses aus dem Filtergehäuse entnommen werden und durch ein neues ausgetauscht werden. Bei solchen Filtereinrichtungen ist es wichtig, dass die Dichtung zwischen dem Filterelement und dem Filtergehäuse ordnungsgemäß funktioniert. Dies kann insbesondere nach häufigen Wechseln des Filterelements problematisch sein. Des Weiteren muss das Filtergehäuse geöffnet werden und später wieder ordnungsgemäß verschlossen werden. Dazu werden häufig Spezialwerkzeuge benötigt, so dass der Austausch des Filterelements umständlich ist. Eine solche Filtereinrichtung ist beispielsweise aus der GB 2 162 087 A oder der WO 2012/084753 A1 bekannt.

Der vorliegenden Erfindung liegt die Aufgabe zugrunde, eine Filtereinrichtung bereitzustellen, durch welche der Wartungsaufwand reduziert werden kann.

Diese Aufgabe wird durch die unabhängigen Ansprüche gelöst. Weitere vorteilhafte Ausführungsformen sind Gegenstand der unabhängigen Ansprüche.

Der Erfindung liegt der allgemeine Gedanken zugrunde, das Filterelement derart auszubilden, dass kein Filtergehäuse benötigt wird, insbesondere den Reinluftbereich ausschließlich durch das Filterelement zu bilden. Auf diese Weise kann zum einen der Reinluftbereich von dem Rohluftbereich sehr zuverlässig abgedichtet werden. Zum anderen kann dadurch das Gesamtvolumen des Filterelements reduziert werden, da kein zusätzliches Gehäuse benötigt wird. Darüber hinaus vereinfacht sich der Wartungsaufwand, da das Filterelement nicht umständlich aus einem Gehäuse entnommen und wieder eingesetzt werden muss. Erreicht wird dies dadurch, dass zumindest die zweite Endscheibe über das Filtermaterial übersteht, dass die Filtereinrichtung mindestens eine Reinluftöffnung und mindestens eine Rohluftöffnung aufweist, wobei zumindest eine solche Reinluftöffnung an dem Filterelement ausgebildet ist, dass das Filterelement lösbar an der Aufnahme anliegt, und dass die Aufnahme, die überstehende zweite Endscheibe, das Filtermaterial und eine Außenwand den Rohluftbereich umschließen. Ferner ist vorgesehen, dass der Rohluftbereich nach innen durch das Filtermaterial und nach außen durch die Außenwand begrenzt ist, dass die Außenwand an einen Verlauf des Filtermaterials angepasst verläuft, dass die Außenwand quer zu den Endscheiben verläuft, Somit ist das Filtermaterial des Filterelements umschlossen und vor Beschädigungen geschützt. Des Weiteren ist das Filtermaterial mit den Endscheiben dicht verbunden, so dass ein ordnungsgemäßer Betrieb des Filterelements möglich ist, so dass der Reinluftbereich nicht durch eine Lösbare Dichtung abgedichtet werden muss. Auf diese Weise ergibt sich auch ein äußerst kompakter Aufbau des Filterelements und damit der Filtereinrichtung, so dass die Filtereinrichtung weniger Bauraum, beispielsweise innerhalb des Motorraums eines Kraftfahrzeuges, benötigt.

Günstig ist es, dass das Filtermaterial und die Endscheiben stoffschlüssig miteinander verbunden sind. Beispielsweise können das Filtermaterial und die Endscheiben durch Kleben oder Plastifizieren miteinander verbunden sein. Die stoffschlüssige Verbindung von Filtermaterial und den Endscheiben bietet eine dichte Verbindung zwischen dem Filtermaterial und den Endscheiben, so dass Luft die das Filterelement durchströmt durch das Filtermaterial strömen muss und so gefiltert wird. Ein Vorbeiströmen von ungefilterter Luft an dem Filtermaterial kann somit vermieden werden.

In der Beschreibung und den beigefügten Ansprüchen wird unter "Plastifizieren" wird eine Verbindungstechnik bezeichnet, bei der einer der zu verbindenden Gegenstände an der Verbindungsstelle erwärmt wird, bis das Material plastisch wird, daraufhin wird der andere Gegenstand auf diese Verbindungsstelle aufgedrückt, so dass dieser zum Teil eintaucht und zum Teil ebenfalls leicht plastisch wird, so dass eine formschlüssige und teilweise stoffschlüssige Verbindung zwischen den beiden Gegenständen entsteht.

Ferner ist es günstig, wenn eine Durchströmungsrichtung des Filtermaterials im Wesentlichen parallel zu den Endscheiben verläuft. Auf diese Weise kann eine besonders kompakte Bauweise des Filterelements erzielt werden.

Eine besonders günstige Möglichkeit sieht vor, dass die Endscheiben an gegenüberliegenden Seiten des Filtermaterials an dem Filtermaterial anliegen. Auf diese Weise können der Reinluftbereich und der Rohluftbereich besonders günstig durch das Filtermaterial getrennt werden.

Die Außenwand ist fest an der überstehenden Endscheibe gehalten oder integral mit der Endscheibe ausgebildet, wobei die Außenwand lose an der Aufnahme aufliegt. Dadurch kann der Rohluftbereich gut abgedichtet werden.

Besonders vorteilhaft ist es, wenn zwischen der Außenwand und der Aufnahme ein Dichtelement angeordnet ist. Dadurch kann der Rohluftbereich noch besser gegen die Umgebung abgedichtet werden.

Eine günstige Variante sieht vor, dass die Aufnahme durch ein flächiges Bauteil oder an einem flächigen Bauteil gebildet ist. Dadurch kann die Aufnahme den Rohluftbereich besonders günstig abdecken. Solche flächigen Bauteile können beispielsweise ein Karosserieteil, ein Designdeckel, ein Gehäusedeckel, eine Zylinderkopfhaube, eine Motorhaube, eine Motorraumrückwand oder eine Ölwanne sein.

Eine Alternative, welche nicht zu der Erfindung gehört, sieht vor, dass die Außenwand fest an der Aufnahme gehalten oder integral mit der Aufnahme ausgebildet ist, wobei die Außenwand lose an der überstehenden Endscheibe anliegt. Dies ist für die Wartung günstig, da die Außenwand nicht mit ausgetauscht werden muss.

Ferner sieht eine besonders vorteilhafte Lösung vor, dass zwischen der Außenwand und der mindestens einen überstehenden Endscheibe ein Dichtelement angeordnet ist. Dadurch kann der Rohluftbereich noch besser gegen die Umgebung abgedichtet werden.

Eine günstige Variante sieht vor, dass das Filterelement durch eine Clips-Verbindung, eine Schraubverbindung, eine Klemmverbindung und/oder eine Steckverbindung mit der Aufnahme verbunden ist.

Eine weitere für eine kompakte Bauweise günstige Möglichkeit sieht vor, dass die Außenwand zumindest abschnittsweise quer, insbesondere im Wesentlichen senkrecht, zu zumindest einer der Endscheiben verläuft.

In der Beschreibung und den beigefügten Ansprüchen wird unter im Wesentlichen senkrecht ein Winkel zwischen 70 und 110, vorzugsweise zwischen 80 und 100, besonders bevorzugt zwischen 88 und 92° verstanden.

Besonders günstig ist es, dass die Außenwand ein I-Profil aufweist. Das heißt die Außenwand läuft gradlinig zwischen der überstehenden Endscheibe zu der Aufnahme. Auf diese Weise wird eine kompakte und stabile Außenhülle der Filtereinrichtung gebildet.

Ferner sieht eine weitere besonders günstige Möglichkeit vor, dass die Außenwand ein C-Profil aufweist. Das heißt die Außenwand verläuft nicht geradlinig von der überstehenden Endscheibe zu der Aufnahme, sondern in einem Bogen. Auf diese Weise kann ein größerer Abstand zwischen der Außenwand und dem Filtermaterial erreicht werden.

Eine vorteilhafte Möglichkeit sieht vor, dass die Endscheiben im Wesentlichen eben sind. Auf diese Weise wird kein unnötiger Platz verbraucht, so dass das Filterelement platzeffizient ist. Des Weiteren können die Endscheiben somit beispielsweise aus größeren Platten gestanzt oder geschnitten werden. Dadurch könnte aus einer Sorte Platten Endscheiben für verschiedene, insbesondere für unterschiedlich große, Filterelemente hergestellt werden, so dass die Lagerhaltungskosten reduziert werden können.

Eine weitere vorteilhafte Möglichkeit sieht vor, dass die Außenwand aus einem Funktionsband gebildet ist. Aus einem Funktionsband können flexibel unterschiedliche Elemente gefertigt werden, so dass die Vielfalt an Ausgangsmaterialien reduziert werden kann, was Lagerhaltungskosten reduziert.

In der Beschreibung und den beigefügten Ansprüchen wird unter einem Funktionsband ein Endlosband, insbesondere aus Kunststoff oder Metall, verstanden, welches beispielsweise aufgerollt transportiert werden kann. Das Funktionsband weist eine konstante Breite und Dicke auf und kann beispielsweise auf die richtige Länge zugeschnitten werden, um daraus die Außenwand des Filterelements zu bilden.

Günstig ist es, dass der Reinluftbereich durch die beiden Endscheiben und das Filtermaterial weitgehend umschlossen ist. Weitgehend umschlossen heißt, dass eine oder mehrere Öffnungen vorgesehen sind, durch welche gefilterte Reinluft aus dem Filterelement und der Filtereinrichtung ausströmen kann. Diese Elemente sind fest, insbesondere durch Stoffschluss miteinander verbunden, so dass die Übergänge zwischen den Elementen dicht sind. Somit kann verhindert werden, dass Rohluft ungefiltert in den Reinluftbereich gelangen kann.

Eine günstige Variante sieht vor, dass der Rohluftbereich kanalförmig ausgebildet ist, insbesondere mit rechteckigem Querschnitt und vorzugsweise mit gebogenem Verlauf. Dadurch, dass der Rohluftbereich kanalförmig ausgebildet ist, können die Abmessungen des Filterelements gezielt angepasst werden, insbesondere an zur Verfügung stehenden Bauraum. Die rechteckige Ausgestaltung des Querschnitts des Rohluftbereichs bietet eine einfache und leicht herzustellende Variante. Durch den gebogenen Verlauf des Rohluftbereichs kann das Filterelement noch besser an zur Verfügung stehenden Bauraum angepasst werden, beispielsweise kann ein hufeisenförmiger Rohluftbereich und damit auch ein hufeisenförmiges Filtermaterial gebildet werden, das eine kompakte Bauweise des Filterelements ermöglicht.

Eine besonders günstige Variante sieht vor, dass weitere Elemente in dem Rohluftbereich angeordnet sind, beispielsweise Leitschaufeln, Drosselklappen, Stützdome. Staubaustragsklappen und/oder rotierende Bauteile. So kann beispielsweise die Luftströmung optimiert, die Stabilität erhöht oder die Lebensdauer vergrößert werden.

Eine besonders günstige Variante sieht vor, dass die Auswand Ausnehmungen aufweist, welche mit einem Vlies abgedeckt sind. Dadurch kann aus dem Rohluftbereich Kondenswasser aus dem Filterelement ablaufen. Der Strömungswiderstand durch die mit Vlies abgedeckten Ausnehmungen ist dabei größer als der Strömungswiderstand durch die Rohluftöffnung. Aus diesem Grund können auch mit Vlies abgedeckte Ausnehmungen in einem unteren Bereich des Filterelements angeordnet sein, so dass das Wasser besonders günstig ablaufen kann, ohne dabei ungünstig große Mengen warmer Luft aus dem Motorraum anzusaugen. Darüber hinaus ist es möglich gezielt Mischluft anzusaugen, nämlich eine Mischung von Außenluft, welche kühl ist und Luft aus dem Motorraum, welche erwärmt ist.

Eine vorteilhafte Lösung sieht vor, dass die Außenwand zumindest abschnittsweise Versteifungsrippen aufweist, die quer zu den Endscheiben verlaufen. Dadurch wird die Stabilität der Außenwand verbessert.

Eine weitere für die Stabilität vorteilhafte Lösung sieht vor, dass die Außenwand zumindest abschnittsweise eine Riffelung aufweist. Darüber hinaus bietet die Riffelung die Möglichkeit der Montage von Elementen an, durch eine Art Rastverbindung, wie sie beispielsweise auch bei Kabelbindern zu finden ist.

In günstiger Weise weist die Außenwand mindestens eine Unterbrechung auf, in welcher funktionale Elemente angeordnet sind. Solche funktionalen Elemente können beispielsweise ein Rohluftanschluss der mindestens einen Rohluftöffnung oder ein Halteelement sein, mit welchem das Filterelement an dem Fahrzeug zusätzlich befestigt werden kann.

In vorteilhafter Weise ist die mindestens eine Rohluftöffnung in der Außenwand angeordnet, insbesondere in einer Unterbrechung der Außenwand. Dadurch kann die Rohluftöffnung variabel an dem Filterelement positioniert werden, so dass das Filterelement besonders günstig anpassbar ist.

Besonders bevorzugt ist es, dass an der mindestens einen Rohluftöffnung ein Rohluftanschluss angeordnet ist. Durch den Rohluftanschluss kann beispielsweise ein Rohr an das Filterelement angeschlossen werden, durch welches Rohluft von einem anderen Ort zugeleitet wird. Beispielsweise kann Luft von einem höher gelegenen Ort angesaugt werden, um, insbesondere bei Geländewagen, ein Ansaugen von Wasser zu verhindern.

Günstig ist es, wenn der Rohluftanschluss lösbar an der Rohluftöffnung gehalten ist. Beispielsweise kann der Rohluftanschluss an dem Filterelement geschraubt, gesteckt, geklemmt, mit Bügeln befestigt und/oder mit einer Clips-Verbindung befestigt sein. Dadurch kann bei einem Wechsel des Filterelements der Rohluftanschluss an in dem Fahrzeug verbleiben, so dass die Kosten für einen neuen Rohluftanschluss eingespart werden können.

Besonders günstig ist es, dass der Rohluftanschluss eine Leitrippe aufweist, die eine direkte Anströmung des Filtermaterials verhindert. Durch die Leitrippe wird eine übermäßige Beladung des Filtermaterials an der Rohluftöffnung verhindert, so dass das Filtermaterial gleichmäßig mit Schmutz beladen wird, so dass die Lebensdauer des Filtermaterials insgesamt verlängert wird.

Die Leitrippe kann starr ausgebildet sein. Dies ist beispielsweise günstig, wenn aufgrund der Luftströmung hohe Kräfte auf die Leitrippe wirken. Ferner kann die Leitrippe luftdurchlässig und flexibel ausgebildet sein, dadurch kann sich die Leitrippe beispielsweise an das Filtermaterial anlegen und das Filtermaterial lokal vor einer zu hohen Beladung mit Staub oder ähnlichem zu schützen.

Ferner ist es günstig, wenn die Leitrippe durch Teleskopzylinder verstellbar an dem Rohluftanschluss gehalten ist. Dadurch können einheitliche Elemente, also einheitliche Leitrippen und Rohluftanschlüsse für unterschiedliche Filterelemente, insbesondere mit unterschiedlichem Abstand zwischen Außenwand und Filtermaterial eingesetzt werden. Dadurch reduzieren sich die Lagerhaltungskosten.

Alternativ oder ergänzend hierzu kann vorgesehen sein, dass das Filterelement eine Leitrippe aufweist, die zwischen der Rohluftöffnung und dem Filtermaterial angeordnet ist und an zumindest einer der Endscheiben gehalten ist. Beispielsweise ist die Leitrippe mit zumindest einer der Endscheiben durch Plastifizieren gehalten. Im Vergleich mit einer Halterung durch Teleskopzylinder können Verwirbelungen an den Teleskopzylindern verhindert werden.

Des Weiteren ist es vorteilhaft, wenn die Leitrippe Ausnehmungen aufweist, durch welche die Rohluft von dem Rohlufteinlass kommend direkt zu dem Filtermaterial strömen kann. Dadurch kann vermieden werden, dass der Bereich des Filtermaterials direkt hinter der Leitrippe zu wenig angeströmt wird.

Eine vorteilhafte Variante sieht vor, dass eine Durchgangsfläche der mindestens einen Rohluftöffnung kleiner ist als eine Filterfläche des Filtermaterials. Auf diese Weise ist zum einen das Filtermaterial vor mechanischen Einflüssen von außen geschützt, so dass Beschädigungen vermieden werden können. Zum anderen kann dadurch, dass die Filterfläche des Filtermaterials größer ist als die Durchgangsfläche der mindestens einen Rohluftöffnung, ein geringer Strömungswiderstand durch das Filterelement erzielt werden.

Besonders vorteilhaft ist es, dass mindestens eine Rohluftöffnung sich in der Au-βenwand und einer der Endscheiben erstreckt. Das heißt die Rohluftöffnung erstreckt sich über Eck. Dadurch kann das Filterelement besonders flexibel angepasst werden.

Eine besonders günstige Lösung sieht vor, dass das Filterelement eine Stirnscheibe aufweist, an welcher mindestens eine Reinluftöffnung gebildet ist. Die Stirnscheibe verschließt zusammen mit den beiden Endscheiben und dem Filtermaterial den Reinluftbereich des Filterelements, so dass die Reinluftöffnung, welche in der Stirnscheibe angeordnet ist, direkten Zugang zu dem Reinluftbereich ermöglicht und somit die Reinluft aus dem Reinluftbereich durch die Reinluftöffnung aus dem Filterelement ausströmen kann.

Ferner ist es besonders günstig, dass die Stirnscheibe quer, insbesondere im Wesentlichen senkrecht, zu den Endscheiben angeordnet ist. Dadurch kann eine besonders kompakte Bauweise des Filterelements erzielt werden.

Ferner sieht eine besonders vorteilhafte Lösung vor, dass das Filterelement mindestens eine Reinluftöffnung aufweist, die in einer der Endscheiben angeordnet ist. Zum einen kann dadurch weiter die Flexibilität des Filterelements erhöht werden. Zum anderen kann eine weitere Reinluftöffnung, welche in einer der Endscheiben angeordnet ist, vorgesehen sein. Somit kann beispielsweise ein weiteres Aggregat eines Kraftfahrzeugs mit reiner Luft versorgt werden.

Günstig ist es, dass das Filterelement eine Zwischenwand aufweist, welche zwischen der Außenwand und dem Filtermaterial in dem Rohluftbereich verläuft und welche mehrere Ausnehmungen aufweist. Dadurch wird ein Bereich des Rohluftbereichs durch die Zwischenwand abgetrennt, welcher zwischen der Zwischenwand und der Außenwand liegt. Durch die Ausnehmungen besteht allerdings weiterhin eine fluidische Verbindung zwischen diesem Bereich und dem restlichen Rohluftbereich. Der Bereich zwischen der Außenwand und der Zwischenwand kann dadurch als Resonator arbeiten und dadurch die Geräuschentwicklung des Verbrennungsmotors dämpfen.

Des Weiteren ist es günstig, das Filterelement eine Zwischenwand aufweist, welche zwischen der Außenwand und dem Filtermaterial in dem Reinluftbereich verläuft und welche mehrere Ausnehmungen aufweist. Dadurch wird ein Bereich des Reinluftbereichs durch die Zwischenwand abgetrennt, welcher zwischen der Zwischenwand und der Außenwand liegt. Durch die Ausnehmungen besteht allerdings weiterhin eine fluidische Verbindung zwischen diesem Bereich und dem restlichen Reinluftbereich. Der Bereich zwischen der Außenwand und der Zwischenwand kann dadurch als Resonator arbeiten und dadurch die Geräuschentwicklung des Verbrennungsmotors dämpfen.

Günstig ist es, dass ein Resonator zwischen der Zwischenwand und der Außenwand gebildet ist. Ferner ist es für die Herstellung des Filterelements günstig, wenn die Zwischenwand aus einem Funktionsband gebildet ist. Darüber hinaus kann eine kompakte Bauweise günstig erreicht werden, wenn die Zwischenwand quer, insbesondere im Wesentlichen senkrecht, zu den Endscheiben verläuft.

Vorteilhaft ist es, dass das Filterelement einen Vorfilter aufweist, der in dem Rohluftbereich vor dem Filtermaterial angeordnet ist, der wandförmig ausgebildet ist und mit Vlies abgedeckte Ausnehmungen aufweist. Das Vlies kann beispielsweise größere Poren aufweisen als das Filtermaterial, so dass das Vlies des Vorfilters eine grobe Vorfilterung, insbesondere von größeren Partikeln oder Feuchtigkeitstropfen, aus der zu filternden Luft bewirkt. Folglich wird das Filtermaterial weniger stark belastet wird. In vorteilhafter Weise ist der Vorfilter aus einem Funktionsband gebildet.

In der Beschreibung und den beigefügten Ansprüchen wird unter wandförmig verstanden, dass eine Ausdehnung in einer ersten Raumrichtungen deutlich kleiner ist als in den zwei übrigen Raumrichtungen. Insbesondere ist die Ausdehnung in den zwei übrigen Raumrichtungen mindestens fünfmal, vorzugsweise mindestens zehnmal besonders bevorzugt mindestens zwanzigmal so groß wie in der ersten Raumrichtung.

Eine vorteilhafte Variante sieht vor, dass das Filterelement eine Innenzarge aufweist, welche in dem Reinluftbereich angeordnet ist, das Filterelement abstützt, wandförmig ausgebildet ist und Ausnehmungen aufweist. Dadurch kann die Innenzarge das Filterelement, insbesondere gegen den Staudruck der zu filternden Luft, welche durch das Filterelement strömt, abstützen. Dabei ist es für die Herstellung des Filterelements günstig, wenn die Innenzarge aus einem Funktionsband gebildet ist.

In günstiger Weise verläuft das Filtermaterial U-förmig oder C-förmig und umschließt den Reinluftbereich zumindest teilweise. Auf diese Weise können Materialkosten eingespart werden, da das Filtermaterial bereits einen Großteil des Reinluftbereichs abschließt. Darüber hinaus wird auf diese Weise eine besonders kompakte Bauweise des Filterelements möglich.

Alternativ oder ergänzend hierzu kann vorgesehen sein, dass das Filtermaterial gerade verläuft (nicht Teil der Erfindung). Auf diese Weise wird auch ein schmales und langes Filterelement erzielt, wodurch sich die Vielfalt der möglichen Formen des Filterelements erhöht. Folglich kann eine hohe Anpassbarkeit des Filterelements in günstiger Weise erreicht werden.

Vorteilhafter Weise ist das Filtermaterial gefaltet. Gefaltete Filtermaterialien weisen bezogen auf das Volumen eine große Filterfläche auf, so dass eine gute Filterleistung bei geringem Strömungswiderstand erzielt werden kann.

Günstig ist es, dass das Filtermaterial des Filterelements zweiteilig ausgebildet ist, dass die beiden Teile des Filtermaterials nebeneinander verlaufen und den Reinluftbereich zwischen sich einschließen und dass der Rohluftbereich zweigeteilt ist und jedem Teil des Filtermaterials ein außenliegender Teil des Rohluftbereichs zugeordnet ist. Dadurch wird der Reinluftbereich des Filterelements von zumindest zwei Seiten durch das Filtermaterial begrenzt, so dass bezogen auf die Größe des Filterelements eine große wirksame Filterfläche erzielt werden kann.

Besonders günstig ist es, dass das Filtermaterial des Filterelements zweiteilig ausgebildet ist, dass die beiden Teile des Filtermaterials nebeneinander verlaufen und den Rohluftbereich zwischen sich einschließen und dass der Reinluftbereich zweigeteilt ist und jedem Teil des Filtermaterials ein außenliegender Teil des Reinluftbereichs zugeordnet ist. Dadurch wird der Rohluftbereich des Filterelements von zumindest zwei Seiten durch das Filtermaterial begrenzt, so dass bezogen auf die Größe des Filterelements eine große wirksame Filterfläche erzielt werden kann. Ferner können die beiden Teile des Filtermaterials unterschiedlich sein, so dass zwei separate Reinluftkreise mit unterschiedlicher Reinheit gebildet werden.

Vorteilhaft ist es, dass der Abstand zwischen der Außenwand und dem Filtermaterial über die Länge des Filtermaterials variiert. Auf diese Weise kann die Strömung angepasst werden, so dass weniger Luftwirbel entstehen und unnötige Strömungen vermieden werden.

Besonders vorteilhaft ist es, dass der Abstand zwischen der Außenwand und dem Filtermaterial sich von der Rohluftöffnung ausgehend verringert. Auf diese Weise kann die Strömungsgeschwindigkeit innerhalb des Rohluftbereichs zumindest annähernd konstant gehalten werden. Zumindest ist die Verringerung der Strömungsgeschwindigkeit schwächer als bei einem konstanten Querschnitt des Rohluftbereichs. Bei einem konstanten Querschnitt des Rohluftbereichs ist im Bereich der Rohluftöffnung die Strömungsgeschwindigkeit der zu filternden Luft größer, da in diesem Bereich mehr Luft durch den Rohluftbereich strömen muss als weiter weg von der Rohluftöffnung, da die Luft die bereits durch das Filterelement geströmt ist nicht mehr durch den Rohluftbereich strömen muss.

Eine strömungstechnisch besonders günstige Lösung sieht vor, dass das Filterelement und/oder der Rohluftbereich V-förmig ausgebildet sind.

Die oben genannte Aufgabe wird ferner durch ein Filterelement für eine Filtereinrichtung gemäß der vorstehenden Beschreibung gelöst. Die Vorteile der Filtereinrichtung sind somit auch für das Filterelement gegeben, auf deren vorstehende Beschreibung insoweit Bezug genommen wird.

Ferner wird die obengenannte Aufgabe durch ein Verfahren zur Herstellung eines Filterelements einer Filtereinrichtung gemäß der vorstehenden Beschreibung gelöst, wobei die Außenwand des Filterelements aus einem Funktionsband gebildet wird und wobei das Funktionsband durch Plastifizieren zumindest an die überstehende Endscheibe angefügt wird. Dadurch, dass die Außenwand des Filterelements aus einem Funktionsband gebildet wird, kann die Lagerhaltung reduziert werden. Aus dem Funktionsband können universell verschiedene Außenwände für verschiedene Filterelemente, insbesondere mit unterschiedlichen Größen hergestellt werden. Folglich kann die Lagerhaltung auf ein einziges oder zumindest wenige verschiedene Funktionsbänder reduziert werden. Das Plastifizieren des Funktionsbands an die Endscheiben ermöglicht eine fluiddichte Verbindung zwischen dem Funktionsband, also der Außenwand und den Endscheiben.

Eine günstige Möglichkeit sieht vor, dass die Zwischenwand des Filterelements aus einem Funktionsband gebildet wird und/oder dass der Vorfilter aus einem Funktionsband gebildet wird und/oder dass die Innenzarge aus einem Funktionsband gebildet wird. Somit können die Außenwand, die Zwischenwand, der Vorfilter und die Innenzarge aus dem gleichen Funktionsband gebildet werden, da insbesondere die jeweilige Höhe dem Abstand der Endscheiben entspricht, welche für diese Teile gleich ist. So kann mit einer Sorte Funktionsband also eine Vielzahl an Elementen des Filterelements gebildet werden. Dadurch können die Lagerkosten weiter verringert werden.

Vorzugsweise werden die Zwischenwand und/oder die Innenzarge und/oder der Vorfilter durch Plastifizieren zumindest mit der überstehenden Endscheibe verbunden. Die Vorteile des Plastifizierens, wie beispielsweise fluiddichte stabile Verbindung wirken sich auch positiv auf die Verbindung der Zwischenwand und/oder der Innenzarge und/oder des Vorfilters mit der überstehenden Endscheibe aus.

Eine besonders günstige Variante sieht vor, dass beim Plastifizieren eines ersten Bauteils mit einem zweiten Bauteil das erste Bauteil lokal an einer Verbindungsstelle, an der das zweite Bauteil mit dem ersten Bauteil verbunden werden soll, erwärmt wird, bis es plastisch ist, und daraufhin das zweite Bauteil auf die Verbindungsstelle gedrückt wird. Dadurch dringt das zweite Bauteil in das erste Bauteil zumindest teilweise ein, wodurch zumindest eine formschlüssige Verbindung entsteht. Darüber hinaus wird das zweite Bauteil durch das erwärmte erste Bauteil ebenfalls erwärmt und im Randbereich plastisch, so dass auch eine stoffschlüssige Verbindung zwischen dem ersten und dem zweiten Bauteil entsteht.

Eine weitere für das Fügen besonders vorteilhafte Lösung sieht vor, dass das Funktionsband vor dem Plastifizieren mit der überstehenden Endscheibe an Verbindungskanten angespitzt wird, auf diese Weise kann das Eintauchen in das andere Bauteil verbessert werden oder die angespitzte Kante kann besonders leicht erwärmt werden und somit eine gute stoffschlüssige Verbindung ermöglichen.

Ferner ist es günstig, wenn das Funktionsband durch Formrollen strukturiert wird, beispielsweise kann dem Funktionsband eine Wellen- und/oder Keilform aufgeprägt werden. Die Wellen und/oder Keile verlaufen insbesondere quer zu einer Ausrollrichtung des Funktionsbandes. Dadurch erhöhen die Wellen und/oder Keile die Steifigkeit des Funktionsbandes und damit der Außenwand.

Besonders vorteilhaft ist es, dass Ausnehmungen in das Funktionsband mittels einer Stanzrolle, insbesondere mittels einer variablen Stanzrolle eingebracht werden. Dadurch kann das Funktionsband individuell an die jeweiligen Anforderungen, insbesondere an die Anforderung der Außenwand, der Zwischenwand, des Vorfilters oder der Innenzarge angepasst werden.

Eine weitere für die Lagerhaltung besonders günstige Variante sieht vor, dass die Breite des Funktionsbandes gekürzt wird. Dadurch können auch breitere Funktionsbänder zur Herstellung des Filterelements verwendet werden. Das bedeutet, dass aus einem Typ Funktionsband Filterelemente mit unterschiedlichen Höhen hergestellt werden können, so dass die Vielzahl der herstellbaren Filterelemente erhöht wird, ohne dass dabei die Zahl der zu lagernden Funktionsbänder erhöht werden muss.

Ferner sieht eine besonders vorteilhafte Variante vor, dass das Vlies durch Plastifizieren auf das Funktionsband aufgebracht wird, insbesondere über die Ausnehmungen des Funktionsbandes, welche die Außenwand oder den Vorfilter des Filterelements bildet. Dadurch kann das Vlies flächig mit dem Funktionsband verbunden werden, ohne dass zusätzliche Materialien wie Klebstoffe verwendet werden müssten. Somit ergibt sich eine kostengünstige Herstellung der Außenwand und des Vorfilters.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: eine perspektivische Darstellung eines erfindungsgemäßen Filterelements,
- Fig. 2: eine Schnittdarstellung entlang der Schnittebene A aus der Fig. 1 einer zweiten Variante des Filterelements,
- Fig. 3: eine Schnittdarstellung entlang der Ebene B durch das Filterelement aus Fig. 1,
- Fig. 4: eine Schnittdarstellung entlang der Schnittebene A aus Fig. 1 der zweiten Variante des Filterelements, wobei zusätzliche optionale Elemente dargestellt sind,
- Fig. 5: eine Prinzipskizze einer Filtereinrichtung umfassend eine Aufnahme und das Filterelement,
- Fig. 6: eine Schnittdarstellung entlang der Ebene A aus Fig. 1 der ersten Variante des Filterelements,
- Fig. 7: eine Schnittdarstellung entlang der Ebene A aus Fig. 1 einer dritten Variante des Filterelements,
- Fig. 8: eine perspektivische Darstellung eines Rohluftanschlusses mit einem Vlies,
- Fig. 9: eine perspektivische Ansicht eines Rohluftanschlusses mit einer Leitrippe,
- Fig. 10: eine Schnittdarstellung entlang einer horizontalen Ebene durch den Rohluftanschluss aus Fig. 9,
- Fig. 11: eine perspektive Ansicht einer Außenwand mit einem in der Außenwand eingesetzten Rohluftanschluss,
- Fig. 12: eine Aufsicht auf die Außenwand aus Fig. 13, zur Darstellung der Verbindung zwischen dem Rohluftanschluss und der Außenwand,
- Fig. 13: eine perspektivische Schnittdarstellung entlang einer der Ebene A aus Fig. 1 entsprechenden Schnittebene einer zweiten Ausführungsform eines erfindungsgemäßen Filterelements,
- Fig. 14: eine Prinzipskizze eines Ausschnitts einer Schnittdarstellung entlang einer der Ebene B aus Fig. 1 entsprechenden Schnittebene durch das Filterelement aus Fig. 13,
- Fig. 15 a-e: perspektivische prinzipielle Darstellungen eines Funktionsbandes, aus welchem eine Außenwand, eine Zwischenwand, ein Vorfilter oder eine Innenzarge gebildet wird,
- Fig. 16: eine Querschnittdarstellung durch ein Funktionsband,
- Fig. 17: eine Prinzipdarstellung der Einbringung von Ausnehmungen in das Funktionsband,
- Fig. 18: eine Prinzipdarstellung des Aufbringens eines Vlieses auf das Funktionsband,
- Fig. 19: eine Schnittdarstellung entlang einer der Ebene A aus Fig. 1 entsprechenden Schnittebene einer dritten Ausführungsform eines Filterelements, welches nicht zu der Erfindung gehört,
- Fig. 20: eine perspektivische Schnittdarstellung des Filterelements aus Fig. 19,
- Fig. 21: eine perspektivische Schnittdarstellung entlang einer der Ebene A aus Fig. 1 entsprechenden Schnittebene einer vierten Ausführungsform eines Filterelements, welches nicht zu der Erfindung gehört,
- Fig. 22: eine perspektivische Schnittdarstellung entlang einer der Ebene A aus Fig. 1 entsprechenden Schnittebene einer fünften Ausführungsform eines Filterelements, welches nicht zu der Erfindung gehört,
- Fig. 23: eine perspektivische Schnittdarstellung entlang einer der Ebene A aus Fig. 1 entsprechenden Schnittebene einer sechsten Ausführungsform eines Filterelements, welches nicht zu der Erfindung gehört,
- Fig. 24: eine Schnittdarstellung entlang einer der Ebene B aus Fig. 1 entsprechenden Schnittebene einer siebten Ausführungsform eines Filterelements, welches nicht zu der Erfindung gehört, und
- Fig. 25: eine der Fig. 14 entsprechende Darstellung, wobei das Filterelement eine gebogene Außenwand mit einer Staubaustragsklappe aufweist.

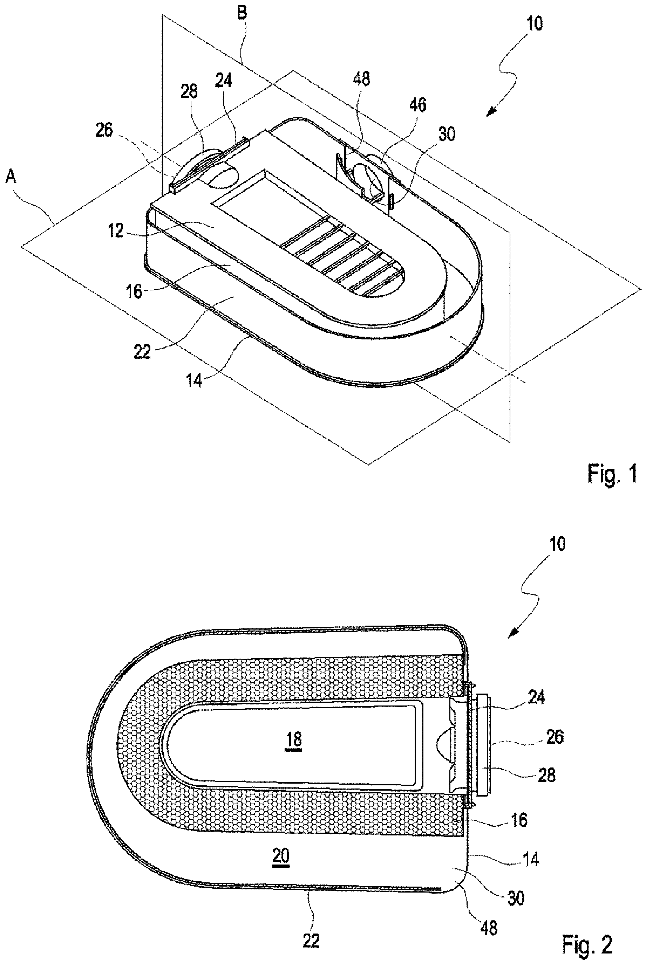

Ein in Fig. 1 dargestelltes Filterelement 10 ist dazu ausgebildet für den Betrieb an einer Aufnahme 44 einer Filtereinrichtung 34 angeordnet zu werden. Dazu weist das Filterelement 10 eine erste Endscheibe 12 und eine zweite Endscheibe 14 auf, welche im Wesentlichen parallel zueinander angeordnet sind, ein Filtermaterial 16, welches einen Reinluftbereich 18 von einem Rohluftbereich 20 trennt und eine Außenwand 22, welche den Rohluftbereich 20 zumindest teilweise umgibt und an der zweiten Endscheibe 14 gehalten ist. Ferner weist das Filterelement 10 eine Stirnscheibe 24 auf, in welcher eine Reinluftöffnung 26 des Filterelements 10 angeordnet ist und welche den Reinluftanschluss 28 trägt. Ferner weist das Filterelement 10 eine Rohluftöffnung 30 auf, welche durch eine Unterbrechung 48 in der Außenwand 22 gebildet ist.

Die Außenwand 22 verläuft quer, insbesondere senkrecht, zu den Endscheiben 12, 14. Die Außenwand 22 kann als separates Bauteil ausgebildet sein und mit der zweiten Endschiebe 14 verbunden sein. Alternativ kann vorgesehen sein, dass die Außenwand 22 integral mit der zweiten Endscheiben 14 ausgebildet ist.

Für den Betrieb der Filtereinrichtung 34 wird das Filterelement 10 an die Aufnahme 44 der Filtereinrichtung 34 angelegt. Die Außenwand 22 liegt dann mit einem Dichtelement 23 an der Aufnahme 44 an, so dass die Aufnahme 44 dabei den Rohluftbereich 20 abschließt. Die Aufnahme 44 kann durch ein Flächiges Bauteil gebildet sein. Beispielsweise kann die Aufnahme 44 durch oder an einem Karosserieteil, einem Designdeckel, einem Gehäusedeckel, einer Zylinderkopfhaube, einer Motorhaube, einer Motorraumrückwand oder einer Ölwanne gebildet sein.

Im Betrieb wird Rohluft durch die Rohluftöffnung 30 in das Filterelement 10 geleitet. Innerhalb des Filterelements 10 muss die Rohluft das Filtermaterial 16 durchströmen und wird dadurch gefiltert. Aus dem Filtermaterial 16 tritt demnach Reinluft in den Reinluftbereich 18 und kann durch die Reinluftöffnung 26 ausströmen und beispielsweise in einen an dem Reinluftanschluss 28 angeordnete Reinlufteinlass einer Filtereinrichtung 34 einströmen.

Die erste Endscheibe 12 und die zweite Endscheibe 14 sind im Wesentlichen eben ausgebildet und verlaufen im Wesentlichen parallel zueinander. Zwischen den beiden Endscheiben ist das Filtermaterial 16 angeordnet und verläuft U-förmig zwischen den beiden Endscheiben 12, 14. Auf diese Weise umschließt das Filtermaterial 16 zumindest teilweise den Reinluftbereich 18. An der offene Seite des U ist die Stirnscheibe 24 angeordnet, welche quer, im Wesentlichen senkrecht, zu den Endscheiben 12 und 14 verläuft und die beiden Endscheiben 12 und 14 in diesem Bereich miteinander verbindet, so dass der Reinluftbereich im Bereich des offenen U des Filtermaterials durch die Stirnscheibe 24 abgeschlossen wird.

Die Stirnscheibe 24 weist die Reinluftöffnung 26 auf, durch welche die vom Filtermaterial 16 gefilterte Luft aus dem Filterelement 10 ausströmen kann. Um die gefilterte Luft zu den Verbrauchern leiten zu können, weist die Stirnscheibe 24 an der Reinluftöffnung 26 einen Reinluftanschluss 28 auf, an welchem die Verbraucher direkt oder über ein Rohr angeschlossen werden können.

Das Filterelement 10 kann außer in der Stirnscheibe 24 noch weitere Reinluftöffnungen 26 aufweisen, beispielsweise in einer der Endscheiben 12 oder 14. Die Anordnung der zweiten Reinluftöffnung 26 kann alternativ oder ergänzend erfolgen, das heißt, es ist beispielsweise möglich nur eine Reinluftöffnung 26 entweder in einer der Endscheiben 12, 14 oder in der Stirnscheibe 24 zu haben, oder sowohl in der Stirnscheibe 24 als auch in einer der Endscheiben 12 oder 14 oder sogar in beiden Endscheiben 12 oder 14. Dies kann beispielsweise sinnvoll sein, wenn mehr als ein Verbraucher für reine Luft vorhanden ist. Ansonsten bietet die flexible Anordnung der Reinluftöffnung 26 großes Anpassungspotential des Filterelements 10 an gegebene Anforderungen.

Dem Reinluftbereich 18, bezogen auf das Filtermaterial 16, gegenüberliegend ist der Rohluftbereich 20 angeordnet, also außerhalb des Filtermaterials 16. Der Rohluftbereich 20 wird durch die zweite Endscheibe 14, welche über das Filtermaterial 16 übersteht, und die Aufnahme 44 begrenzt. Nach innen wird der Rohluftbereich 20 durch das Filtermaterial 16 begrenzt und nach außen wird der Rohluftbereich 20 durch die Außenwand 22 begrenzt. Die Außenwand 22 verläuft ebenfalls im Wesentlichen U-förmig, also an den Verlauf des Filtermaterials 16 angepasst.

Dabei weist die Außenwand 22 einen Abstand zu dem Filtermaterial 16 auf, um den Rohluftbereich 20 zu bilden. Im Bereich der Rohluftöffnung 30 ist der Abstand der Außenwand 22 zu dem Filtermaterial 16 größer als in Bereichen, die entfernt von der Rohluftöffnung 30 liegen. Da der Rohluftbereich 20 sich entlang des Filtermaterials 16 erstreckt, muss durch den Rohluftbereich 20 von der Rohluftöffnung 30 ausgehend am Anfang mehr Rohluft durch den Rohluftbereich 20 strömen als am Ende des Rohluftbereichs 20. Durch den sich verringernden Abstand zwischen der Außenwand 22 und dem Filtermaterial 16 verringert sich auch der Querschnitt des Rohluftbereichs 20 entsprechend der Rohluftmenge, welche durch den Rohluftbereich 20 strömt, so dass die Strömungsgeschwindigkeit innerhalb des Rohluftbereichs 20 weniger stark variiert als sie bei einem konstanten Querschnitt des Rohluftbereichs 20 variieren würde.

Ferner können in dem Rohluftbereich 20 oder Reinluftbereich 18 zwischen den beiden Endscheiben 12, 14 weitere Elemente angeordnet sein, beispielsweise eine Leitschaufel 36 mit welcher die Strömung innerhalb des Rohluftbereichs 20 beeinflusst wird um die Beladung des Filtermaterials 16 zu beeinflussen und/oder diese anzugleichen. Des Weiteren kann ein oder mehrere Stützdome 38 zwischen den Endscheiben 12 und 14 angeordnet sein, um die Stabilität des Filterelements zu erhöhen. Darüber hinaus ist es möglich einen oder mehrere Sensoren 40, beispielsweise Luftmassen-, oder Luftqualitätssensoren in dem Reinluftbereich 18 oder Rohluftbereich 20 anzuordnen. Ferner besteht die Möglichkeit beispielsweise einen Zuganker 42, kurz Anker 42, vorzusehen, welcher die beiden Endscheiben 12 und 14 zueinander zieht und somit Schwingungen der beiden Endscheiben 12 und 14 vermindert. Zusätzlich kann der Anker 42 genutzt werden, um das Filterelement 10 an der Aufnahme 44 der Filtereinrichtung 34 zuhalten.

Alternativ kann das Filterelement 10 auch über die Außenwand 22 an der Aufnahme 22 gehalten sein. Beispielsweise können an der Außenwand 22 Rastnasen angeordnet sein, die in Öffnungen an der Aufnahme 44 greifen oder umgekehrt. Ferner kann die Aufnahme 44 Nuten aufweise, in welche die Außenwand 22 gesteckt werden kann. Schließlich ist auch eine Schraubverbindung oder eine Klemmverbindung, beispielsweise mit einem Bügel oder einer Schelle, zwischen der Aufnahme 44 und der Außenwand 22 denkbar.

An der Rohluftöffnung 30 kann das Filterelement 10 einen Rohluftanschluss 46 aufweisen, welcher beispielsweise in einer Ausnehmung, oder Unterbrechung 48 der Außenwand 22 angeordnet ist. Der Rohluftanschluss 46 bietet die Möglichkeit des Anschlusses weiterer strömungstechnischer Elemente, beispielsweise eines Rohres. Der Rohluftanschluss 46 weist einen zylinderförmigen Anschlussabschnitt 50 auf, an welchem beispielsweise ein Rohr angeschlossen werden kann. Der Anschlussabschnitt 50 ist an einem Wandabschnitt 51 angeordnet, welcher die Außenwand 22 innerhalb der Unterbrechung 48 der Außenwand 22 ersetzt.

Ferner ist an dem Rohluftanschluss 46 eine Leitrippe 52 angeordnet, welche an einer dem Anschlussabschnitt 50 gegenüberliegenden Seite des Wandabschnitts 51 angeordnet ist und im montierten Zustand innerhalb des Rohluftbereichs 20 liegt. Zur Stabilisierung des Filterelements 10 kann zusätzlich vorgesehen sein, dass die Leitrippe 52 mit einer oder beiden Endscheiben 12, 14 verbunden ist. Beispielsweise kann die Leitrippe 52 durch Plastifizieren mit den Endscheiben 12, 14 verbunden werden.

Als Plastifizieren wird eine Verbindungstechnik bezeichnet, bei der einer der zu verbindenden Gegenstände an der Verbindungsstelle erwärmt wird, bis das Material plastisch wird, daraufhin wird der andere Gegenstand auf diese Verbindungsstelle aufgedrückt, so dass dieser zum Teil eintaucht und zum Teil ebenfalls leicht plastisch wird, so dass eine formschlüssige und teilweise stoffschlüssige Verbindung zwischen den beiden Gegenständen entsteht.

Rohluft, die durch die Rohluftöffnung 30 in dem Rohluftanschluss 46 in das Filterelement 10 einströmt, trifft dadurch auf die Leitrippe 52, wodurch das Filtermaterial 16, welches direkt an der Rohluftöffnung 30 angeordnet ist, vor einer zu starken Beladung geschützt werden kann.

Die Leitrippe 52 kann beispielsweise mit Teleskopzylindern 54 an dem Wandabschnitt 51 des Rohluftanschlusses 46 gehalten sein. Durch die Teleskopzylinder 54 kann der Winkel und der Abstand der Leitrippen 52 zu dem Filtermaterial 16 angepasst werden, so dass der Rohluftanschluss 46 variabel an unterschiedlichen Stellen in der Außenwand 22 des Filterelements 10 angeordnet werden kann. Insbesondere an Stellen mit unterschiedlichem Abstand zwischen Außenwand 22 und Filtermaterial 16. Der Teleskopzylinder kann feine Rippen aufweisen, welche eine Ausziehkraft der Teleskopzylinder 54 regulieren.

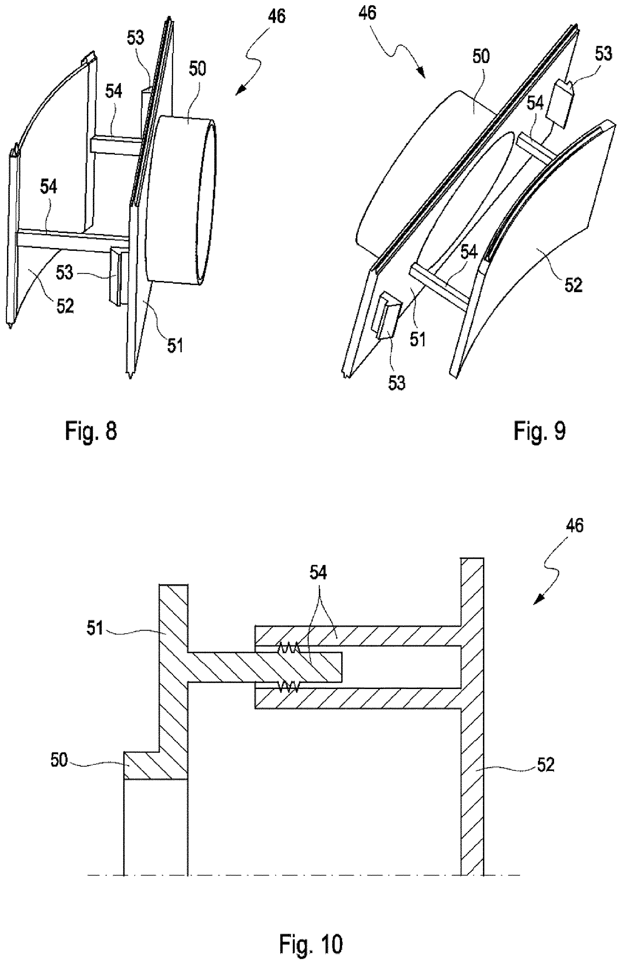

Die Verbindung von dem Rohluftanschluss 46, insbesondere des Wandabschnitts 51 mit der Außenwand 22, ist beispielsweise eine Rastverbindung. So weist beispielsweise der in Fig. 8 und 9 dargestellte Rohluftanschluss 46 zwei Rastnasen 53 auf, welche die Außenwand 22 hintergreifen, wenn der Rohluftanschluss 46 von außen in die Unterbrechung 48 der Außenwand 22 geschoben wird.

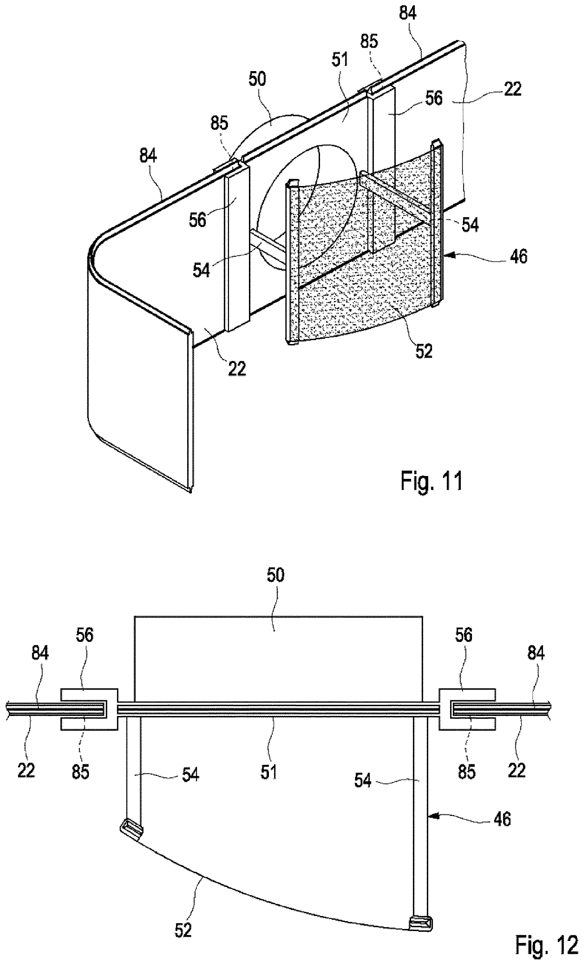

Alternativ hierzu kann beispielsweise wie in den Fig. 11 und 12 dargestellt der Rohluftanschluss 46 C-förmig ausgebildete Verbindungselemente 56 aufweisen, welche an der Innenseite eine Riffelung 85 aufweisen. Entsprechend ist die Au-βenwand 22 ebenfalls geriffelt. Die Riffelungen 85 des Verbindungselements 56 und der Außenwand 22 sind schräg, so dass sich die Außenwand 22 zwar in das Verbindungselement 56 einschieben lässt, aber ein Herausziehen der Außenwand 22 aus dem Verbindungselement 56 nicht oder nur erschwert möglich ist.

Die Leitrippe 52 kann starr ausgebildet sein oder als Vlies ausgebildet sein, wobei sich dann die Leitrippe 52 an das Filtermaterial 16 anlegen kann.

Bei einer nicht gezeigten Alternative kann der Rohluftanschluss 46 auch lösbar an der Außenwand 22 des Filterelements 10 gehalten sein. Beispielsweise kann der Rohluftanschluss 46 durch eine Schraubverbindung, eine Steckverbindung, Klemmverbindung, einen Bügel oder eine Clips-Verbindung an de, Filterelement 10, insbesondere an der Außenwand 22, lösbar gehalten sein. Bei dieser Alternative kann auch vorgesehen sein, dass die Leitrippe 52 statt an dem Rohluftanschluss 46 an zumindest einer der Endscheiben 12, 14 gehalten ist.

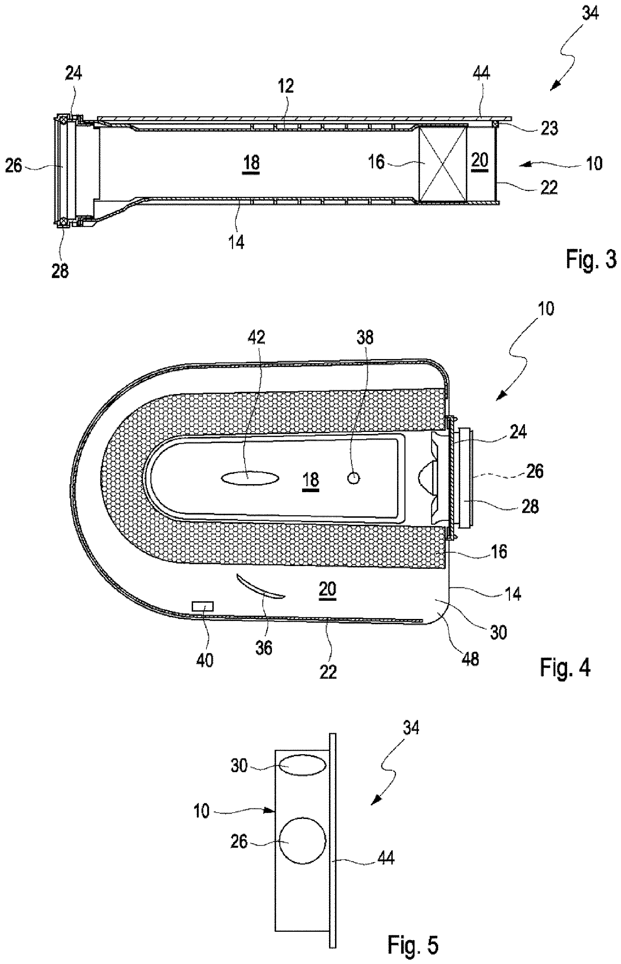

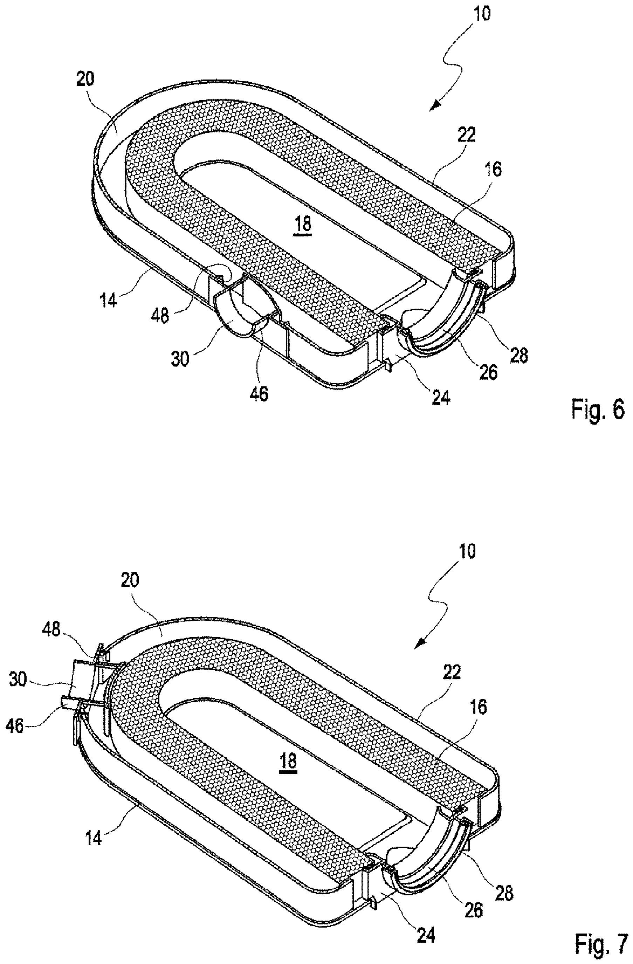

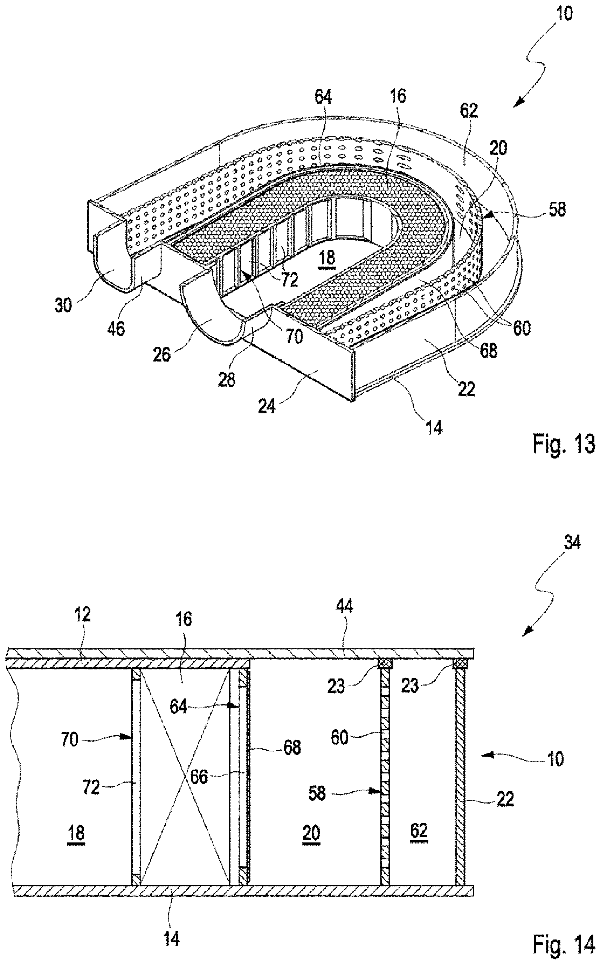

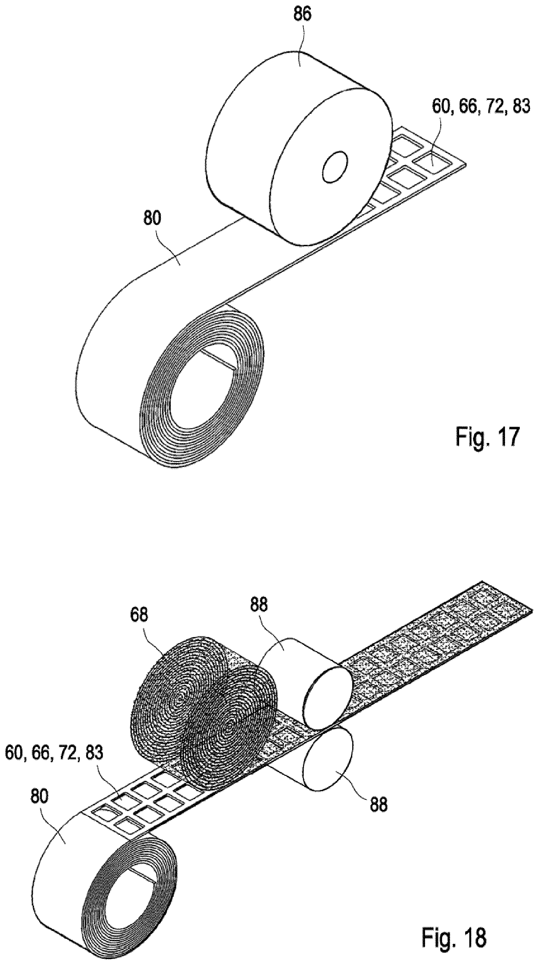

Eine in den Fig. 13 bis 18 dargestellte zweite Ausführungsform der Filtereinrichtung 34 unterscheidet sich von der in der Fig. 1 bis 12 dargestellten ersten Ausführungsform der Filtereinrichtung 34 dadurch, dass das Filterelement 10 weitere Elemente zur Verbesserung oder Erweiterung der Funktion des Filterelements 10 aufweist, wie beispielsweise in Fig. 14 dargestellt.

So kann beispielsweise das Filterelement 10 eine Zwischenwand 58 aufweisen, welche sich von der zweiten Endscheibe 14 zu der Aufnahme 44 innerhalb des Rohluftbereichs 20 erstreckt und dadurch den Rohluftbereich 20 unterteilt. An der Zwischenwand 58 ist ein Dichtelement 23 angeordnet, welches an der Aufnahme 44 anliegt, wenn das Filterelement 10 an der Aufnahme 44 angebracht ist.

Die Zwischenwand 58 weist Ausnehmungen 60 auf, durch welche eine Verbindung zwischen den beiden Teilen des Rohluftbereichs 20 ermöglicht ist. Zwischen der Zwischenwand 58 und der Außenwand 22 ist dadurch ein Resonator 62 gebildet, welcher mit dem inneren Teil des Rohluftbereichs 20 wechselwirken und dadurch die Geräuschentwicklung reduzieren kann.

Des Weiteren kann vor dem Filtermaterial 16 ein Vorfilter 64 angeordnet sein, welcher mehrere Ausnehmungen 66 aufweist, welche wiederum mit einem luftdurchlässigen Medium, beispielsweise Vlies 68 abgedeckt sind. Das Vlies 68 weist dabei gröbere und/oder größere Poren auf als das Filtermaterial 16, so dass das Vlies 68 des Vorfilters 64 gröbere Partikel/Schmutzpartikel aus der Rohluft entfernt, bevor diese durch das Filtermaterial 16 strömt. Dadurch kann sich die Lebensdauer des Filterelements 10 erhöhen. Des Weiteren hält das Vlies 68 Feuchtigkeitstropfen zurück.

Um die Stabilität des Filtermaterials 16 zu verbessern kann eine Innenzarge 70 vorgesehen sein, welche an der dem Reinluftbereich 18 zugewandten Seite des Filtermaterials 16 an dem Filtermaterial 16 anliegt, um das Filtermaterial 16 zu stützen. Die Innenzarge 70 verläuft dafür von der ersten Endscheibe 12 bis zur zweiten Endscheibe 14 und ist mit diesen beiden Endscheiben 12, 14 verbunden, so dass die Innenzarge 70 das Filtermaterial 16 stützen kann. Um den Betrieb des Filterelements 10 nicht zu beeinträchtigen weist die Innenzarge 70 Ausnehmungen 72 auf, durch welche die gefilterte Luft durch die Innenzarge 70 in den Reinluftbereich 18 strömen kann.

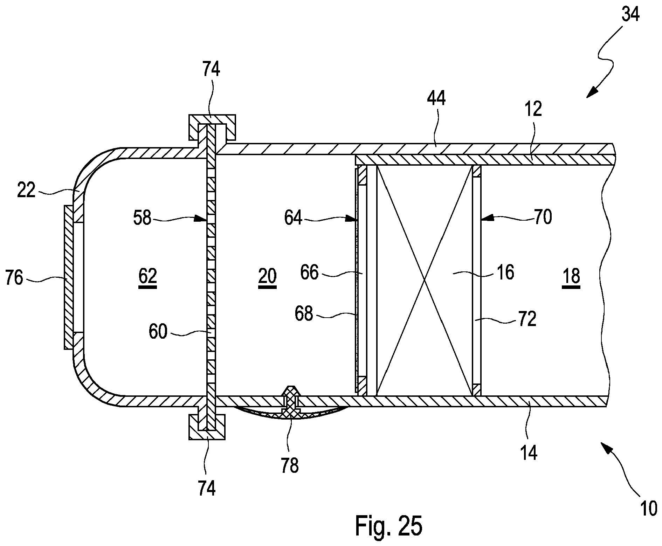

Bei einer in Fig. 25 dargestellten Variante weist die Außenwand 22 keinen geraden Verlauf zwischen der zweiten Endscheibe 14 und der Aufnahme 44 auf, sondern ist nach außen gewölbt. Die Verbindung zwischen der Außenwand 22 und der zweiten Endscheibe 14 bzw. der Aufnahme 44 und zu der Zwischenwand 58 erfolgt dabei über Klammern 74, welche einen flanschartigen Vorsprung der Au-βenwand 22 oder der Aufnahme 44 und der Zwischenwand 58 zusammenhalten.

In der Außenwand 22 kann eine Staubaustragsklappe 76 vorgesehen sein, durch welche Staub, der beispielsweise von dem Vorfilter 64 abgefangen wurde und sich vom Vorfilter 64 gelöst hat, aus dem Filterelement 10 entfernt werden kann. Des Weiteren kann beispielsweise in der zweiten Endscheibe 14 ein Stopfen 78 vorgesehen sein, durch welchen ebenfalls Staub oder auch Wasser aus dem Filterelement 10 ausgetragen werden kann. Der Stopfen 78 ist vorzugsweise als Lippenventil ausgebildet, das Lippen aufweist, die von außen an der Filterelement 10 anliegen, so dass das Lippenventil bei einem Überdruck im Filterelement 10 öffnen kann. Beispielsweise öffnet der Stopfen 78 bei einer Druckpulsation an den Druckspitzen, so dass dadurch automatisch Staub und Wasser aus dem Filterelement 10 ausgetragen werden kann.

Die Außenwand 22, die Zwischenwand 58, der Vorfilter 64 und die Innenzarge 70 sind vorzugsweise aus einen Funktionsband 80 gebildet. Das Funktionsband 80 ist ein Kunststoffband, welches als Endlosband ausgebildet ist. Endlos bedeutet in dem Fall nur sehr lange, insbesondere wird das Funktionsband 80 auf Rollen gelagert. Das Funktionsband 80 weist also eine konstante Wandstärke und konstante Breite auf. Dadurch ist es sowohl für die Außenwand 22, für die Zwischenwand 58, für den Vorfilter 64 und die Innenzarge 70 geeignet, da diese Elemente in etwa die gleiche Höhe aufweisen, da sie jeweils von der ersten Endscheibe 12 bis zur zweiten Endscheibe 14 verlaufen, welche im Wesentlichen parallel zueinander verlaufen.

Das Funktionsband 80 kann zur Ausbildung der einzelnen Elemente jeweils modifiziert werden. Beispielsweise kann das Funktionsband 80 mit Versteifungsrippen 82 versehen werden, welche beispielsweise der Außenwand 22 eine höhere Stabilität und damit dem Filterelement 10 eine höhere Stabilität verleihen.

Alternativ oder ergänzend hierzu kann vorgesehen sein, dem Funktionsband 80 eine Wellen- und/oder Keilform aufzuprägen. Auch dadurch kann die Stabilität der aus dem Funktionsband 80 gebildeten Außenwand 22 erhöht werden.

Des Weiteren können in das Funktionsband 80 Ausnehmungen 60, 66, 72, 83 eingebracht werden, um die Funktion der einzelnen Elemente zu erweitern oder zu ermöglichen. So können beispielsweise Ausnehmungen 83 in der Außenwand 22 eingebracht werden, die wiederum mit einem Vlies abgedeckt werden, damit Kondenswasser aus dem Filterelement durch diese Ausnehmungen 83 in der Au-βenwand 22 ablaufen kann. Des Weiteren kann auf das Funktionsband Vlies aufgebracht werden um beispielsweise die Ausnehmungen 66 des Vorfilters 64 abzudecken. Dies kann beispielsweise durch Plastifizieren oder Kleben erfolgen.

Letztlich kann das Funktionsband 80 mit einer Riffelung 85 versehen werden, die sowohl die Steifigkeit des Funktionsbandes erhöht als auch eine Rastverbindung, beispielsweise zu dem Rohluftanschluss 46 ermöglicht.

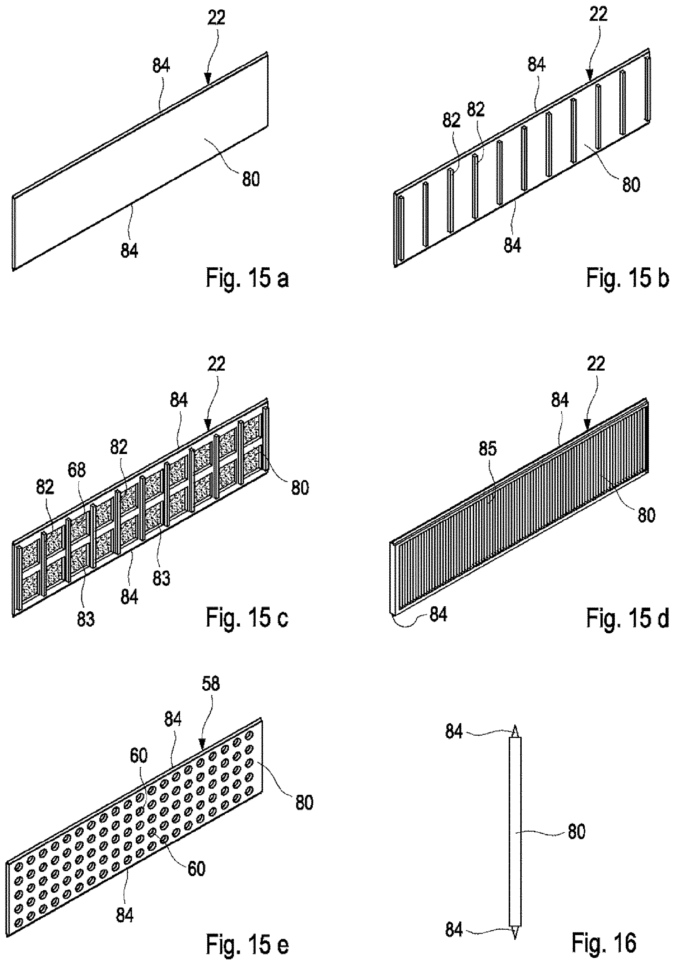

Die Elemente, die aus dem Funktionsband 80 gebildet werden, also die Außenwand 22, die Zwischenwand 58 der Vorfilter 64 und die Innenzarge 70 werden beispielsweise durch Plastifizieren zumindest mit der zweiten Endscheibe 14 verbunden. Um das Plastifizieren zu vereinfachen oder zu verbessern, kann das Funktionsband 80 an einer Verbindungskante 84, mit welcher die Elemente, die aus dem Funktionsband 80 gebildet werden, an den Endscheiben 12, 14 angebracht werden, angespitzt werden (siehe Fig. 16).

Die Ausnehmungen 60, 66, 72, 83 können durch eine Stanzrolle 86, vorzugsweise durch eine variable Stanzrolle 86 in das Funktionsband 80 eingebracht werden. Das Vlies 68 kann beispielsweise durch eine Pressrolle 88 auf das Funktionsband 80 aufgepresst werden. Nach dem das Funktionsband 80 erwärmt wurde, ist das Funktionsband 80 zumindest an der Oberfläche plastisch ist, so dass das Vlies 68 sich mit dem Funktionsband 80 verbindet.

Im Übrigen stimmt die in den Fig. 13 bis 18 dargestellte zweite Ausführungsform der Filtereinrichtung 34 hinsichtlich Aufbau und Funktion mit der in den Fig. 1 bis 12 dargestellten ersten Ausführungsform der Filtereinrichtung 34 überein, auf deren Vorstehende Beschreibung insoweit Bezug genommen wird.

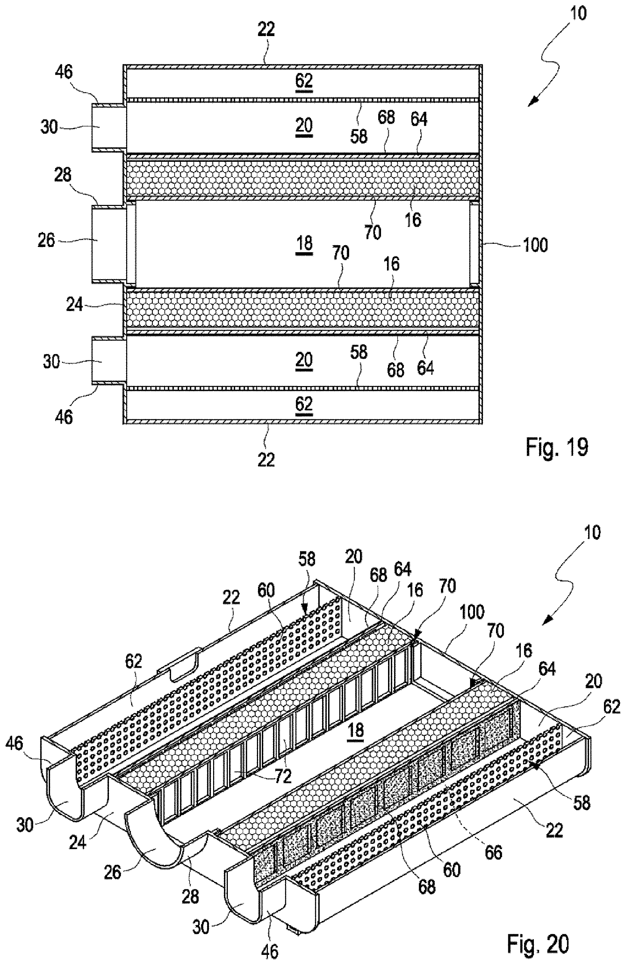

Eine in den Fig. 19 und 20 dargestellte dritte Ausführungsform der Filtereinrichtung 34 unterscheidet sich von der in den Fig. 13 bis 18 dargestellten zweiten Ausführungsform der Filtereirichtung 34 dadurch, dass das Filtermaterial 16 zweigeteilt ist und gerade verläuft, wobei der Reinluftbereich 18 zwischen den beiden Teilen des Filtermaterials 16, den beiden Endscheiben 12, 14 der Stirnscheibe 24 und einer Rückplatte 100 liegt, welche quer zu den beiden Endscheiben 12, 14 verläuft und die erste Endscheiben 12 mit der zweiten Endscheibe 14 verbindet.

Dadurch weist das Filterelement 10 zwei voneinander getrennte Rohluftbereich 20 auf, welche zu beiden Seiten des Filtermaterials 16 außen angeordnet sind. Die Stirnscheibe 24 weist weiterhin die Reinluftöffnung 26 auf, durch welche gefilterte Luft aus dem Reinluftbereich 18 aus dem Filterelement 10 ausströmen kann. Des Weiteren weist die Stirnscheibe 24 zwei Rohluftöffnungen 30 auf, die jeweils zu einem der beiden Rohluftbereiche 20 gehören und durch welche Rohluft in das Filterelement 10 einströmen kann.

Es versteht sich, dass die Rohluftöffnungen 30 auch in der Rückplatte 100, in den Außenwänden 22, und/oder über Eck in der Außenwand 22 und den Endscheiben 12, 14 angeordnet sein können. Ferner versteht sich, dass die Anordnung der Reinluftöffnung 26 nicht auf die Stirnscheibe 24 beschränkt ist.

Alternativ hierzu kann auch vorgesehen sein, dass Rohluftbereich 20 und Reinluftbereich 18 getauscht sind. Das Filterelement 10 hätte dann zwei voneinander getrennt Reinluftbereiche 18, die auch eine unterschiedliche Güte aufweisen können, wenn die beiden Teile des Filtermaterials 16 entsprechend ausgewählt werden.

Im Übrigen stimmt die in den Fig. 19 und 20 dargestellte dritte Ausführungsform der Filtereinrichtung 34 mit der in den Fig. 13 bis 18 dargestellten zweiten Ausführungsform der Filtereinrichtung 34 hinsichtlich Aufbau und Funktion überein, auf deren vorstehende Beschreibung insoweit Bezug genommen wird.

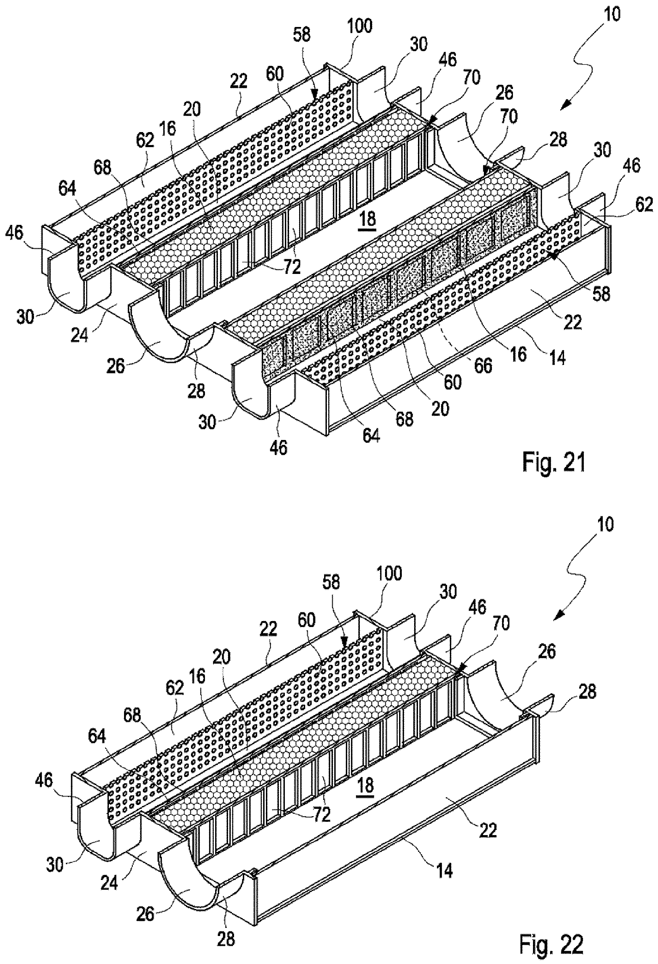

Eine in Fig. 21 dargestellte vierte Ausführungsform der Filtereinrichtung 34 unterscheidet sich von der in den Fig. 19 und 20 dargestellten dritten Ausführungsform der Filtereinrichtung 34 dadurch, dass auch die Rückplatte 100 eine Reinluftöffnung 26, einen Reinluftanschluss 28 und zwei Rohluftöffnungen 30 mit zugehörigen Rohluftanschlüssen 46 aufweist.

Im Übrigen stimmt die in den Fig. 21 dargestellte vierte Ausführungsform der Filtereinrichtung 34 hinsichtlich Aufbau und Funktion mit der in den Fig. 19 und 20 dargestellten dritten Ausführungsform der Filtereinrichtung 34 überein, auf deren vorstehende Beschreibung insoweit Bezug genommen wird.

Eine in Fig. 22 dargestellte fünfte Ausführungsform der Filtereinrichtung 34 unterscheidet sich von der in Fig. 21 dargestellten vierten Ausführungsform der Filtereinrichtung 34 dadurch, dass das Filterelement 10 nur einen Rohluftbereich 20 und ein Filtermaterial 16 aufweist.

Alternativ oder ergänzend hierzu kann vorgesehen sein, dass in dem Reinluftbereich 18 eine Zwischenwand 58 angeordnet sein, die zwischen der Zwischenwand und der Außenwand 22 einen Resonator 62 bildet.

Im Übrigen stimmt die in Fig. 22 dargestellte fünfte Ausführungsform des Filtereinrichtung 34 hinsichtlich Aufbau und Funktion mit der in Fig. 21 dargestellten vierten Ausführungsform der Filtereinrichtung 34 hinsichtlich Aufbau und Funktion überein, auf deren vorstehenden Beschreibung insoweit Bezug genommen wird.

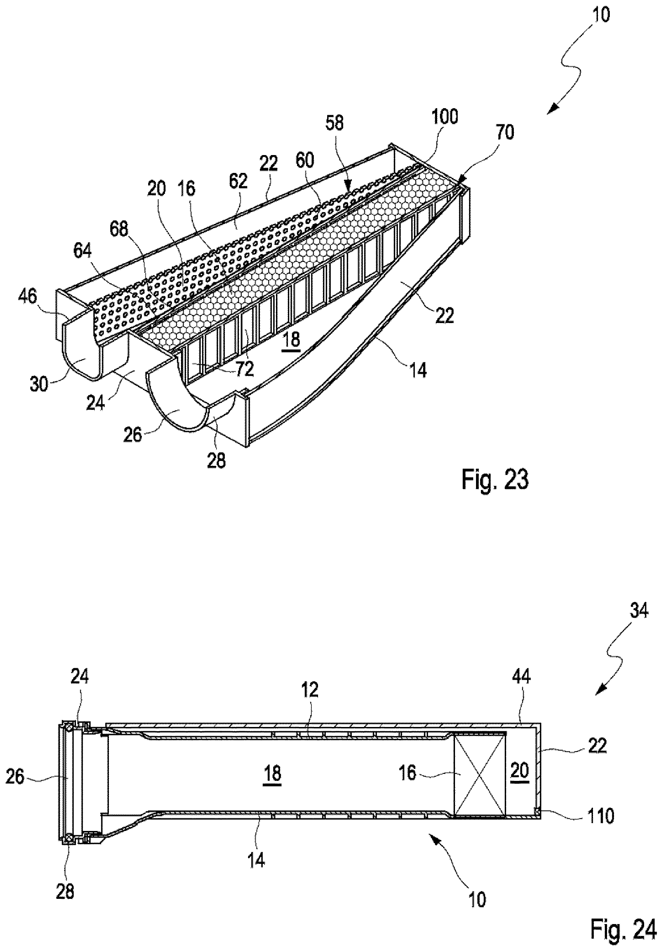

Eine in Fig. 23 dargestellte sechste Ausführungsform der Filtereinrichtung 34 unterscheidet sich von der in Fig. 22 dargestellten fünften Ausführungsform der Filtereinrichtung 34 dadurch, dass nur in der Stirnscheibe 24 eine Reinluftöffnung 26 und eine Rohluftöffnung 30 angeordnet sind und dadurch, dass sich der Rohluftbereich 20 und der Reinluftbereich 18 keilförmig verjüngen.

Dies wird dadurch erreicht, dass die Außenwand 22 an dem Rohluftbereich 20 von der Rohluftöffnung 30 ausgehend bis zur Rückplatte 100 den Abstand zu dem Filtermaterial 16 verringert und dass die Zwischenwand 58 ebenfalls derart verläuft, dass ein Abstand von der Zwischenwand 58 zu dem Filtermaterial 16 von der Rohluftöffnung 30 ausgehend bis zu der Rückplatte 100 sich verringert.

Entsprechend verläuft die Außenwand 22 an der Reinluftseite derart, dass ein Abstand der Außenwand 22 zu dem Filtermaterial 16 von der Reinluftöffnung 26 ausgehend bis zur Rückscheibe sich verringert.

Dadurch wird eine schräge Anströmung des Filtermaterials erzielt was für die Belastungen des Filtermaterials 16 besonders günstig ist.

Im Übrigen stimmt die in Fig. 23 dargestellte sechste Ausführungsform der Filtereinrichtung 34 mit der in Fig. 22 dargestellten fünften Ausführungsform der Filtereinrichtung 34 hinsichtlich Aufbau und Funktion überein, auf deren vorstehende Beschreibung insoweit Bezug genommen wird.

Eine in Fig. 24 dargestellte Variante der Ausführungsformen der Filtereinrichtung 34 unterscheidet sich von den in den Fig. 1 bis 23 dargestellten Ausführungsformen eins bis sechs der Filtereinrichtung 34 dadurch, dass die Außenwand 22 an der Aufnahme 44 angeordnet ist und über ein Dichtelement 110 lose an der zweiten Endscheibe 14 anliegt.

Die Außenwand 22 kann durch Plastifizieren, Kleben oder ähnliches mit der Aufnahme 44 verbunden sein. Ferner kann die Außenwand 22 integral mit der Aufnahme 44 ausgebildet sein.

Im Übrigen stimmt die in Fig. 24 dargestellt Variante der Ausführungsformen der Filtereinrichtung 34 mit den in den Fig. 1 bis 23 dargestellten Ausführungsformen eins bis sechs hinsichtlich Aufbau und Funktion überein, auf deren Vorstehende Beschreibung insoweit Bezug genommen wird.

## Patentansprüche

1. Filtereinrichtung (34), insbesondere für einen Verbrennungskraftmotor oder eine Brennstoffzelle eines Kraftfahrzeugs, mit einer Fahrzeugseitigen Aufnahme (44) und einem wechselbaren Filterelement (10), insbesondere Luftfilterelement,
- wobei das Filterelement (10) eine erste Endscheibe (12), eine zweite Endscheibe (14) und ein zwischen den Endscheiben (12, 14) angeordnetes Filtermaterial (16) aufweist, das einen Reinluftbereich (18) von einem Rohluftbereich (20) trennt,
- wobei das Filtermaterial (16) U-förmig oder C-förmig verläuft und den Reinluftbereich (18) zumindest teilweise umschließt,
- wobei die Filtereinrichtung (34) mindestens eine am Filterelement (10) ausgebildete Reinluftöffnung (26) und mindestens eine Rohluftöffnung (30) aufweist,
- wobei das Filterelement (10) lösbar an der Aufnahme (44) anliegt,
**dadurch gekennzeichnet,**
- **dass** zumindest die zweite Endscheibe (14) über das Filtermaterial (16) übersteht und eine Außenwand (22) aufweist,
- **dass** die Außenwand (22) fest an der überstehenden zweiten Endscheibe (14) gehalten oder integral mit der zweiten Endscheibe (14) ausgebildet ist,
- **dass** die Außenwand (22) lose an der Aufnahme (44) aufliegt,
- **dass** der Rohluftbereich (20) von der Aufnahme (44), der überstehenden zweiten Endscheibe (14), dem Filtermaterial (16) und der Außenwand (22) umschlossen ist.

2. Filtereinrichtung nach Anspruch 1,
**dadurch gekennzeichnet,**
**dass** der Rohluftbereich (20) kanalförmig ausgebildet ist, insbesondere mit rechteckigem Querschnitt und vorzugsweise mit gebogenem Verlauf.

3. Filtereinrichtung nach einem der vorhergehenden Ansprüche,
**dadurch gekennzeichnet,**
**dass** die Außenwand (22) Ausnehmungen (83) aufweist, welche mit einem Vlies (68) abgedeckt sind.

4. Filtereinrichtung nach einem der Ansprüche 1 bis 3,
**dadurch gekennzeichnet,**
**dass** die Außenwand (22) mindestens eine Unterbrechung (48) aufweist, in welcher funktionale Elemente angeordnet sind.

5. Filtereinrichtung nach einem der Ansprüche 1 bis 4,
**dadurch gekennzeichnet,**
**dass** das Filterelement (10) eine Stirnscheibe (24) aufweist, an welcher die mindestens eine Reinluftöffnung (26) gebildet ist.

6. Filtereinrichtung nach einem der Ansprüche 1 bis 5,
**dadurch gekennzeichnet,**
**dass** das Filterelement (10) eine Zwischenwand (58) aufweist, welche zwischen der Außenwand (22) und dem Filtermaterial (16) in dem Rohluftbereich (20) und/oder in dem Reinluftbereich (18) verläuft und welche mehrere Ausnehmungen (60) aufweist.

7. Filtereinrichtung nach einem der Ansprüche 1 bis 6,
**dadurch gekennzeichnet,**
**dass** das Filterelement (10) einen Vorfilter (64) aufweist, der in dem Rohluftbereich (20) vor dem Filtermaterial (16) angeordnet ist, der wandförmig ausgebildet ist und mit Vlies (68) abgedeckte Ausnehmungen (66) aufweist.

8. Filtereinrichtung nach einem der Ansprüche 1 bis 7,
**dadurch gekennzeichnet,**
**dass** das Filterelement (10) eine Innenzarge (70) aufweist, welche in dem Reinluftbereich (18) angeordnet ist, das Filtermaterial (16) abstützt, wandförmig ausgebildet ist und Ausnehmungen (72) aufweist.

9. Verfahren zur Herstellung eines Filterelements (10) einer Filtereinrichtung (34) nach einem der Ansprüche 1 bis 8,
**dadurch gekennzeichnet,**
- **dass** die Außenwand (22) des Filterelements (10) aus einem Funktionsband (80) gebildet wird, und
- **dass** das Funktionsband (80) durch Plastifizieren zumindest an die zweite Endscheibe (14), die über das Filtermaterial übersteht, angefügt wird.

10. Verfahren nach Anspruch 9,
**dadurch gekennzeichnet,**
- **dass** die Zwischenwand (58) des Filterelements (10) aus einem Funktionsband (80) gebildet wird, und/oder
- **dass** der Vorfilter (64) aus einem Funktionsband (80) gebildet wird, und/oder
- **dass** die Innenzarge (70) aus einem Funktionsband (80) gebildet wird.

11. Verfahren nach Anspruch 9 oder 10,
**dadurch gekennzeichnet,**
**dass** beim Plastifizieren eines ersten Bauteils mit einem zweiten Bauteil, das erste Bauteil lokal an einer Verbindungsstelle, an der das zweite Bauteil mit der ersten Bauteil verbunden werden soll, erwärmt wird, bis es plastisch ist, und daraufhin das zweite Bauteil auf die Verbindungsstelle gedrückt wird.

12. Verfahren nach einem der Ansprüche 9 bis 11,
**dadurch gekennzeichnet,**
- **dass** das Funktionsband (80) vor dem Plastifizieren mit der überstehenden Endscheibe (12, 14) an Verbindungskanten (84) angespitzt wird, und/oder
- **dass** Ausnehmungen (60, 66, 72, 83) in das Funktionsband (80) mittels einer Stanzrolle (86), insbesondere mittels einer variablen Stanzrolle (86) gestanzt werden, und/oder
- **dass** die Breite des Funktionsbandes (80) gekürzt wird.

13. Verfahren nach einem der Ansprüche 9 bis 12,
**dadurch gekennzeichnet,**
**dass** das Vlies (68) durch Plastifizieren auf das Funktionsband (80) aufgebracht wird, insbesondere über die Ausnehmungen (66, 83) des Funktionsbandes (80), welches die Außenwand (22) oder den Vorfilter (64) des Filterelements (10) bildet.

14. Verfahren nach einem der Ansprüche 9 bis 13,
**dadurch gekennzeichnet,**
**dass** das Funktionsband durch Formrollen strukturiert wird, insbesondere, dass dem Funktionsband eine Wellen- und/oder Keilform aufgeprägt wird.

## Claims

1. A filtering system (34), in particular for an internal combustion engine or a fuel cell for a motor vehicle, having a holder (44) on the vehicle and an exchangeable filter element (10), in particular an air filter element,
- wherein the filter element (10) comprises a first end plate (12), a second end plate (14) and a filtering material (16) that is arranged between the end plates (12, 14) and separates a filtered air zone (18) from an unfiltered air zone (20),
- wherein the filtering system (34) comprises at least one filtered air opening (26) formed at the filter element (10) and at least one unfiltered air opening (30),
- wherein the filter element (10) lies detachably on the holder (44),
**characterized in**
- **that** at least the second end plate (14) protrudes beyond the filtering material (16),
- **that** the outer wall (22) is held securely on the protruding second end plate (14) or is formed integrally with the second end plate (14),
- **that** the outer wall (22) lies loosely on the holder (44),
- **that** the unfiltered air zone (20) is enclosed by the holder (44), the protruding second end plate (14), the filtering material (16) and the outer wall (22).

2. The filtering system according to Claim 1, **characterized in that**
the unfiltered air zone (20) is constructed so as to be channel-shaped, in particular with a rectangular cross-section and preferably curved in course.

3. The filtering system according to any one of the preceding Claims,
**characterized in that**
the outer wall (22) has recesses (83) which are covered by a non-woven material (68).

4. The filtering system according to one of Claims 1 to 3,
**characterized in that**
the outer wall (22) has at least one interruption (48), in which functional elements are arranged.

5. The filtering system according to one of Claims 1 to 4,
**characterized in that**
the filter element (10) has a front plate (24), on which at least one filtered air opening (26) is formed.

6. The filtering system according to one of Claims 1 to 5,
**characterized in that**
the filtering element (10) has an intermediate wall (58), which runs between the outer wall (22) and the filtering material (16) in the unfiltered air zone (20) and/or in the filtered air zone (18) and which has a plurality of recesses (60).

7. The filtering system according to one of Claims 1 to 6,
**characterized in that**
the filtering element (10) has a pre-filter (64), which is arranged in the unfiltered air zone (20) in front of the filtering material (16), which is formed so as to be wall-shaped and has recesses (66) covered with non-woven material (68).

8. The filtering system according to one of Claims 1 to 7,
**characterized in that**
the filter element (10) has an inner frame (70), which is arranged in the filtered air zone (18), supports the filtering material (16), is formed so as to be wall-shaped and has recesses (72).

9. A method for the production of a filter element (10) of a filtering system (34) according to one of Claims 1 to 8,
**characterized in that**
- the outer wall (22) of the filter element (10) is formed from a functional strip (80) and
- the functional strip (80) is joined by plasticizing at least to the second end plate (14), which protrudes beyond the filtering material.

10. The method according to Claim 9,
**characterized in that**
- the intermediate wall (58) of the filter element (10) is formed from a functional strip (80), and/or
- the pre-filter (64) is formed from a functional strip (80), and/or
- the inner frame (70) is formed from a functional strip (80).

11. The method according to Claim 9 or 10,
**characterized in that**
during the plasticizing of a first component with a second component, the first component is heated locally at a connection site, at which the second component is to be connected to the first component, until it is plastic, and then the second component is pressed onto the connection site.

12. The method according to one of Claims 9 to 11,
**characterized in that**
- the functional strip (80) is pointed at connection edges (84) before the plasticizing with the protruding end plate (12, 14), and/or
- recesses (60, 66, 72, 83) are punched into the functional strip (80) by means of a punching roller (86), in particular by means of a variable punching roller (86), and/or
- the width of the functional strip (80) is shortened.

13. The method according to one of Claims 9 to 12,
**characterized in that**
the non-woven material (68) is applied onto the functional strip (80) by plasticizing, in particular over the recesses (66, 83) of the functional strip (80), which forms the outer wall (22) or the pre-filter (64) of the filter element (10).

14. The method according to one of Claims 9 to 13,
**characterized in that**
the functional strip is structured by forming rollers, in particular that an undulation shape and/or wedge shape is impressed on the functional strip.

## Revendications

1. Dispositif de filtration (34), en particulier pour un moteur à combustion interne ou une pile à combustible d'un véhicule automobile, avec un réceptacle (44) côté véhicule et un élément formant filtre (10), en particulier un élément formant filtre à air, pouvant être échangé,
- dans lequel l'élément formant filtre (10) présente une première plaque d'extrémité (12), une seconde plaque d'extrémité (14) et un matériau filtrant (16) agencé entre les plaques d'extrémité (12, 14) et qui sépare une région d'air propre (18) d'une région d'air brut (20),
- dans lequel le matériau filtrant (16) présente une forme en U ou en C et confine au moins partiellement la région d'air brut (18),
- dans lequel le dispositif de filtration (34) présente au moins une ouverture d'air propre (26) réalisée au niveau de l'élément formant filtre (10) et au moins une ouverture d'air brut (30),
- dans lequel l'élément formant filtre (10) jouxte de manière amovible le réceptacle (44),
**caractérisé en ce**
- **qu'**au moins la seconde plaque d'extrémité (14) dépasse du matériau filtrant (16) et présente une paroi extérieure (22),
- **que** la paroi extérieure (22) est réalisée fixe au niveau de la seconde plaque d'extrémité (14) qui dépasse ou est solidaire de la seconde plaque d'extrémité (14),
- **que** la paroi extérieure (22) repose mobile contre le réceptacle (44),
- **que** la région d'air brute (20) est confinée par le réceptacle (44), la seconde plaque d'extrémité (14) qui dépasse, le matériau filtrant (16) et la paroi extérieure (22).

2. Dispositif de filtration selon la revendication 1,
**caractérisé en ce que**
la région d'air brut (20) est réalisée en forme de canal, en particulier avec une section transversale rectangulaire et de manière préférée avec un tracé incurvé.

3. Dispositif de filtration selon l'une quelconque des revendications précédentes,
**caractérisé en ce que**
la paroi extérieure (22) présente des évidements (83) qui sont recouverts d'un voile (68).

4. Dispositif de filtration selon l'une quelconque des revendications 1 à 3,
**caractérisé en ce que**
la paroi extérieure (22) présente au moins une interruption (48) dans laquelle sont agencés des éléments fonctionnels.

5. Dispositif de filtration selon l'une quelconque des revendications 1 à 4,
**caractérisé en ce que**
l'élément formant filtre (10) présente une plaque frontale (24) au niveau de laquelle est formée la au moins une ouverture d'air propre (26).

6. Dispositif de filtration selon l'une quelconque des revendications 1 à 5,
**caractérisé en ce que**
l'élément formant filtre (10) présente une paroi intermédiaire (58) qui s'étend au sein de la région d'air brut (20) et/ou de la région d'air propre (18) entre la paroi extérieure (22) et le matériau filtrant (16) et qui présente plusieurs évidements (60).

7. Dispositif de filtration selon l'une quelconque des revendications 1 à 6,
**caractérisé en ce que**
l'élément formant filtre (10) présente un préfiltre (64) qui est agencé devant le matériau filtrant (16) au sein de la région d'air brut (20), est réalisé sous forme de paroi et présente des évidements (66) recouverts par un voile (68).

8. Dispositif de filtration selon l'une quelconque des revendications 1 à 7,
**caractérisé en ce que**
l'élément formant filtre (10) présente un châssis intérieur (70) qui est agencé au sein de la région d'air propre (18), supporte le matériau filtrant (16), est réalisé sous forme de paroi et présente des évidements (72).

9. Procédé de fabrication d'un élément formant filtre (10) d'un dispositif de filtration (34) selon l'une quelconque des revendications 1 à 8,
**caractérisé en ce que**
- la paroi extérieure (22) de l'élément formant filtre (10) est formée d'une ceinture fonctionnelle (80), et
- la ceinture fonctionnelle (80) est fixée par plastification au moins à la seconde plaque d'extrémité (14) dépassant du matériau filtrant.

10. Procédé selon la revendication 9,
**caractérisé en ce que**
- la paroi intermédiaire (58) de l'élément formant filtre (10) est formée d'une ceinture fonctionnelle (80), et/ou
- le préfiltre (64) est formé d'une ceinture fonctionnelle (80), et/ou
- le châssis intérieur (70) est formé d'une ceinture fonctionnelle (80).

11. Procédé selon la revendication 9 ou 10,
**caractérisé en ce que**
lors de la plastification d'un premier composant avec un second composant, le premier composant est chauffé localement jusqu'à ce qu'il soit plastique au niveau d'un point de liaison auquel le second composant doit être relié au premier composant, et le second composant est ensuite pressé contre le point de liaison.

12. Procédé selon l'une quelconque des revendications 9 à 11,
**caractérisé en ce que**
- la ceinture fonctionnelle (80) est affinée au niveau des arêtes de liaison (84) avant la plastification avec la plaque d'extrémité (12, 14) qui dépasse, et/ou
- des évidements (60, 66, 72, 83) sont pratiqués dans la ceinture fonctionnelle (80) au moyen d'un rouleau de découpe (86), en particulier au moyen d'un rouleau de découpe (86) variable, et/ou
- la largeur de la ceinture fonctionnelle (80) est réduite.

13. Procédé selon l'une quelconque des revendications 9 à 12,
**caractérisé en ce que**
le voile (68) est appliqué sur la ceinture fonctionnelle (80) par plastification, en particulier par-dessus les évidements (66, 83) de la ceinture fonctionnelle (80) qui forme la paroi extérieure (22) ou le préfiltre (64) de l'élément formant filtre (10).

14. Procédé selon l'une quelconque des revendications 9 à 13,
**caractérisé en ce que**
la ceinture fonctionnelle est structurée grâce à des rouleaux de formage, en particulier **en ce qu'**une forme ondulée et/ou cunéiforme est conférée à la ceinture fonctionnelle.
